# EUROPÄISCHE PATENTSCHRIFT

(11) **EP 3 956 134 B1**
(45) Veröffentlichungstag und Bekanntmachung des Hinweises auf die Patenterteilung: **27.12.2023**
(21) Anmeldenummer: 20706727.3
(22) Anmeldetag: 25.02.2020
(51) Int. Cl.: B29D 30/06, B29C 33/10

(54) **ENTLÜFTUNGSEINHEIT FÜR EIN FORMSEGMENT EINER REIFEN-VULKANISATIONSFORM UND DERARTIGES FORMSEGMENT**
VENTING UNIT FOR A MOLD SEGMENT OF A TIRE VULCANIZATION MOLD, AND SUCH A MOLD SEGMENT
UNITÉ DE VENTILATION POUR UN SEGMENT DE MOULE DE VULCANISATION D'UN PNEUMATIQUE ET TEL SEGMENT DE MOULE

(30) Priorität: 16.04.2019 DE 102019205506
(43) Veröffentlichungstag der Anmeldung: 23.02.2022
(73) Patentinhaber: Continental Reifen Deutschland GmbH, 30165 Hannover (DE)
(72) Erfinder: DZICK, Jürgen, 30419 Hannover (DE); HOPPE, Nicholas, 30419 Hannover (DE)
(74) Vertreter: Continental Corporation
(86) Internationale Anmeldenummer: PCT/EP2020/054811
(87) Internationale Veröffentlichungsnummer: WO 2020/211995

(56) Entgegenhaltungen:
- EP-A1- 2 946 899
- WO-A1-2015/105821
- CN-A- 108 312 586
- DE-A1- 19 923 952
- DE-A1-102016 209 912
- JP-A- 2005 028 589
- JP-A- 2016 159 471
- KR-A- 20140 126 557

## Beschreibung

Die Erfindung betrifft eine Entlüftungseinheit für ein Formsegment einer Vulkanisationsform eines Fahrzeugluftreifens mit einem in eine Bohrung des Formsegmentes einpressbaren, zylindrischen, hülsenförmigen und eine zentrale Achse aufweisenden Gehäuse und mit einem im Gehäuse befindlichen und gegenüber diesem in Achsrichtung beweglichen, federbeaufschlagten Ventileinsatz mit einem das Gehäuse an seinem einen Ende verschließbaren Ventilverschluss, welcher in seiner geschlossenen Lage mit einer ringförmig umlaufenden Kontaktfläche auf einer ringförmig umlaufenden Kontaktfläche an der Innenwand des Gehäuses flächig aufsitzt. Die Erfindung betrifft ferner ein Formsegment einer Vulkanisationsform eines Fahrzeugluftreifens mit einer Bohrung, in welcher eine Entlüftungseinheit eingepresst ist, welche ein zylindrisches, hülsenförmiges und eine zentrale Achse aufweisendes Gehäuse und einen im Gehäuse befindlichen und gegenüber diesem in Achsrichtung beweglichen, federbeaufschlagten Ventileinsatz mit einem das Gehäuse an seinem bei der Formsegmentinnenseite befindlichen Ende verschließbaren Ventilverschluss aufweist.

In Vulkanisationsformen für Fahrzeugluftreifen befindet sich eine große Anzahl von Entlüftungsbohrungen, in Vulkanisationsformen für PKW-Reifen beispielsweise im Durchschnitt etwa 4.500 Entlüftungsbohrungen. Es ist üblich, in die Entlüftungsbohrungen Entlüftungseinheiten einzusetzen, die Ventileinsätze mit Ventilverschlüssen enthalten, welche bei eingeformten Rohreifen die Entlüftungsbohrungen verschließen und das Entstehen von Gummiaustrieben während der Vulkanisation des Reifens zumindest weitgehend verhindern. Während des Einformens des Rohreifens sind die Ventileinsätze bzw. die Ventilverschlüsse geöffnet, sie stehen an den Formsegmentinnenseiten über, sodass die erforderliche Entlüftung während des Einformens des Rohreifens stattfinden kann. Eine Entlüftungseinheit eingangs genannter Art ist beispielsweise aus der DE 10 2016 209 912 A1 bekannt. Der Ventilverschluss ist kegelstumpfförmig gestaltet und kontaktiert in der geschlossenen Position der Entlüftungseinheit eine an der Innenseite des in die Entlüftungsbohrung eingepressten Gehäuses vorgesehene und an die kegelstumpfförmige Gestalt des Ventilverschlusses angepasste Kontaktfläche.

Eine weitere Entlüftungseinheit eingangs genannter Art ist aus der KR 2014 0126557 A bekannt. Diese Entlüftungseinheit weist einen Ventilverschluss auf, welcher sich auf einer federbeaufschlagten Betätigungsstange befindet und vor dem Einformen des Reifenrohlings über die Innenseite des Formsegmentes bzw. der Vulkanisationsform vorsteht. Beim Einformen des Reifenrohlings sorgen langestreckte Löcher zwischen dem Gehäuse und der Betätigungsstange für ein Ableiten der innerhalb der Vulkanisationsform befindlichen Luft. Bei eingeformtem Reifenrohling verschließt der Ventilverschluss die Entlüftungslöcher. Bei der aus der WO 2015/105821 A1 bekannten Entlüftungseinheit weist das Gehäuse eine über die gesamte Gehäuselänge ausgebildete Entlüftungspassage auf, um beim Einformen des Reifens für die erforderliche Luftabfuhr aus dem Inneren der Vulkanisationsform zu sorgen. Der Ventilverschluss soll die Entlüftungseinheit im einvulkanisierten Zustand des Reifens spaltfrei verschließen. Eine ähnliche Ausführung einer Entlüftungseinheit, bei welcher seitlich des Ventilverschluss zumindest eine Entlüftungspassage vorgesehen ist, ist aus der EP 2 946 899 A1 bekannt. Im eingeformten Zustand des Rohreifens soll der Ventilverschluss dicht am Entlüftungsgehäuse anliegen. weitere Entlüftungseinheiten sind aus den Patentanmeldeschriften DE 199 23 952 A1 und JP 2016 159 471 A bekannt.

Bestimmte Kautschukmischungen für Laufstreifen von Fahrzeugluftreifen, insbesondere solche für Winterreifen, durchlaufen in Folge ihrer speziellen Zusammensetzung beim Einformen des Rohreifens und beim Vulkanisieren desselben besonders fließfähige Stadien. In Folge dieser hohen Fließfähigkeit ist die Gefahr des unerwünschten Eindringens solcher Kautschukmischungen in den Innenraum der Entlüftungseinheiten besonders hoch. Dringt eine Kautschukmischung in das Innere einer Entlüftungseinheit ein, so legt sie sich auch um die Feder, die dann nicht mehr ordnungsgemäß funktionieren kann. Dies hat zur Folge, dass schon bei einer vergleichsweise geringen Anzahl von Heizzyklen die Entlüftungseinheiten blockiert sind, da sie dicht mit Gummimaterial gefüllt sind. Dadurch ist keine ausreichende Entlüftung der Vulkanisationsform mehr möglich und am vulkanisierten Reifen entstehen Schwindstellen, wobei je nach Schweregrad diese Schwindstellen der vulkanisierte Reifen qualitativ derart beeinträchtigt sein kann, dass er ausgeschieden werden muss. Die Vulkanisationsform muss dann aus der Reifenheizpresse ausgebaut werden, die Entlüftungseinheiten entfernt und durch neue ersetzt werden. Diese Maßnahmen verursachen neben einem Stillstand in der Produktion zusätzliche Kosten durch neue Entlüftungseinheiten und deren Einbau.

Der Erfindung liegt die Aufgabe zugrunde, eine Entlüftungseinheit und ein Formsegment mit einer Entlüftungseinheit derart zu gestalten, dass auch besonders fließfähige Kautschukmischungen nicht mehr in das Innere der Entlüftungseinheiten eindringen und diese blockieren.

Gelöst wird die gestellte Aufgabe erfindungsgemäß mit einer Entlüftungseinheit, welche dadurch gekennzeichnet ist, dass im geschlossenen Zustand der Entlüftungseinheit außerhalb der Kontaktflächen ein parallel zur zentralen Achse orientierter, nach außen offener, ringförmig umlaufender Spalt vorhanden ist und zwischen dem Ventilverschluss und der Innenwand des Gehäuses innerhalb der Kontaktflächen Spalten vorhanden sind, die in der Art einer Labyrinthdichtung wirken, indem der Ventilverschluss und die Innenwand des Gehäuses treppenartig mit zumindest zwei Stufen gestuft sind, wobei der Außendurchmesser der Stufen in Richtung Gehäuseinneres abnimmt und wobei zumindest die innerhalb der Kontaktflächen vorhandenen Spalten zwischen den Stufenflächen der Stufen an der Innenwand des Gehäuses und den Stufenflächen der Stufen am Ventilverschluss gebildet sind.

Die gestellte Aufgabe wird ferner erfindungsgemäß mit einem Formsegment gelöst, welches dadurch gekennzeichnet ist, im geschlossenen Zustand der Entlüftungseinheit zwischen dem Ventilverschluss und der Innenwand der Bohrung radial außerhalb der Kontaktflächen ein in radialer Richtung orientierter, ringförmig umlaufender, zur Formsegmentinnenseite offener Spalt vorhanden ist und der Ventilverschluss mit einer ringförmig umlaufenden Kontaktfläche auf einer ringförmig umlaufenden Kontaktfläche an der Innenwand der Bohrung flächig aufsitzt und zwischen dem Ventilverschluss und der Innenwand der Bohrung oder der Innenwand des Gehäuses radial innerhalb der Kontaktflächen Spalten vorhanden sind, die in der Art einer Labyrinthdichtung wirken, indem der Ventilverschluss sowie die Innenwand der Bohrung und/oder des Gehäuses treppenartig mit zumindest zwei Stufen gestuft sind, wobei der Außendurchmesser der Stufen in Richtung Gehäuse- und Bohrungsinneres abnimmt und wobei innerhalb der Kontaktflächen die Spalten zwischen den Stufenflächen der Stufen am Ventilverschluss und Stufenflächen der Stufen an der Innenwand der Bohrung und/oder des Gehäuses gebildet sind

Bei der Erfindung sorgen die analog zu Labyrinthdichtungen wirkenden Spalten dafür, dass radial innerhalb der Kontaktflächen zwischen dem Ventilverschluss und dem Gehäuse der Entlüftungseinheit bzw. der Bohrung im Formsegment keine Kautschukmischung mehr einfließen kann. Die Labryinthgeometrie, bei welcher zumindest ein Richtungswechsel im Labyrinth vorgesehen ist, macht ein Passieren von niedrigviskoser Kautschukmischung so gut wie unmöglich. Zusätzlich erschweren die bei einer Labyrinthgeometrie vorgesehenen schmalen Spalten einen etwaigen Durchfluss durch die wirkenden Kapillarkräfte. Somit ist für eine absolute Dichtheit des Ventilverschlusses gesorgt und es entfallen aufwendige Wartungsarbeiten an Vulkanisationsformen. Darüber hinaus kann eine große Anzahl von Heizzyklen ohne Blockade der Entlüftungseinheiten stattfinden und es können die Reifen qualitativ einwandfrei vulkanisiert werden.

Die Entlüftungseinheit ist bevorzugt derart ausgeführt, dass in ihrem geschlossenen Zustand außerhalb der Kontaktflächen ein vorzugsweise parallel zur zentralen Achse orientierter, nach außen offener, ringförmig umlaufender Spalt vorhanden ist. Bei einer bevorzugten Ausführung ist dieser Spalt zwischen dem Ventilverschluss und der Innenwand des Gehäuses gebildet. Bei einer weiteren möglichen Ausführung entsteht dieser Spalt, wenn die Entlüftungseinheit in die Bohrung des Formsegmentes eingesetzt wird zwischen der Bohrungswand und dem Ventilverschluss. Was das Formsegment betrifft, ist die diesbezügliche Ausgestaltung insbesondere derart, dass radial außerhalb der Kontaktflächen ein in radialer Richtung orientierter, ringförmig umlaufender, zur Formsegmentinnenseite offener Spalt zwischen dem Ventilverschluss und der Innenwand der Bohrung vorhanden ist. In diesen Spalt kann nun während der Vulkanisation eines Rohreifens entsprechend fließfähige Kautschukmischung eindringen, die jedoch die "Labyrinthspalten" innerhalb der Kontaktfläche nicht passieren kann und in diesen Bereich kaum eindringt. Das im außerhalb der Kontaktflächen befindlichen Spalt vulkanisierte Gummimaterial wird beim Entformen des Reifens mitentformt.

Bevorzugt sind die Kontaktflächen Stufenflächen an den am weitesten außen befindlichen Stufen, wobei diese Stufenflächen bevorzugt parallel zur Außenfläche des Ventilverschlusses bzw. zur Formsegmentinnenseite verlaufen.

Bei einer weiteren bevorzugten Ausführung verlaufen die Stufenflächen, welche innerhalb der die Kontaktflächen bildenden Stufenflächen an diese unmittelbar anschließen, in Richtung Gehäuseinneres geneigt und schließen mit der zentralen Achse des Gehäuses jeweils einen spitzen Winkel von vorzugsweise 10° bis 60°, insbesondere 15° bis 45°, ein. Diese schräg verlaufende Stufenflächen bilden daher einen "konischen" Einlaufbereich für den Ventilverschluss, verhindern ein Verklemmen und Verkippen des Ventilverschlusses und des Ventileinsatzes und bilden zugleich einen Spalt der Labyrinthdichtung.

Die vorgesehenen Spalten weisen bevorzugt eine Breite von 0,01 mm bis 0,5 mm, insbesondere von 0,05 mm bis 0,25 mm, auf. Die Anzahl der Stufen beträgt bei bevorzugten Ausführungen bis zu vier.

Weitere Merkmale, Vorteile und Einzelheiten der Erfindung werden nun anhand der schematischen Zeichnung näher beschrieben. Dabei zeigen
Fig. 1a und Fig. 1b schematisch Schnittdarstellungen eines Teilbereiches eines Formsegmentes einer Vulkanisationsform,
Fig. 2 eine vergrößerte Ansicht, teilweise im Schnitt, einer im Formsegment positionierten Entlüftungseinheit im geschlossenen Zustand mit einer ersten Ausführungsvariante der Erfindung,
Fig. 2a einen Teil einer Entlüftungseinheit mit einer Variante der in Fig. 2 gezeigten Ausführung,
Fig. 3 eine vergrößerte Darstellung des Details D der Fig. 2,
Fig. 4 das Detail D aus Fig. 3 bei eingeformtem Rohreifen,
Fig. 5 das Detail D aus Fig. 3 in einer Stellung während des Entformens des vulkanisierten Reifens und
Fig. 6 bis Fig. 8 weitere Ausführungsvarianten der Erfindung jeweils anhand eines Teiles einer Entlüftungseinheit in deren geschlossenen Stellung.

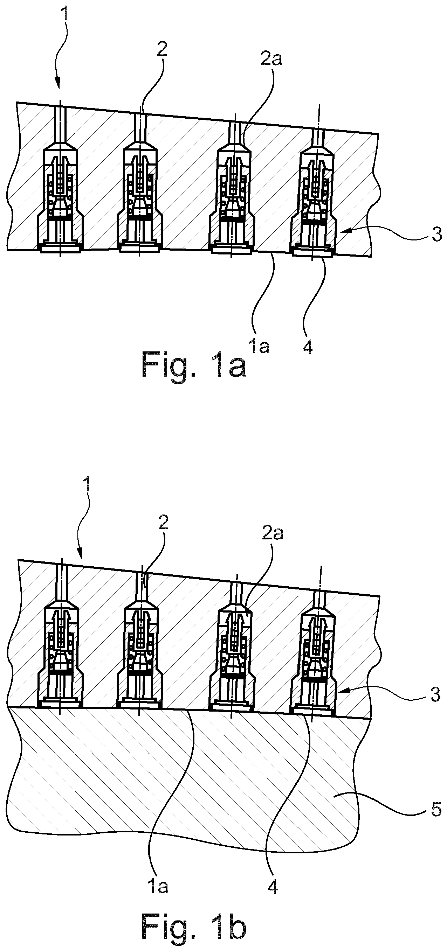

Fig. 1a und Fig. 1b zeigen Schnittdarstellungen eines Teiles eines Formsegmentes 1 einer Vulkanisationsform für einen Fahrzeugreifen. Bekannterweise bildet eine Anzahl von Formsegmenten 1 einen Formsegmentring zur Ausformung des profilierten Laufstreifens des in die Vulkanisationsform eingesetzten Rohreifens. Die Schnitte durch das Formsegment 1 zeigen ferner Längsschnitte durch einige Entlüftungsbohrungen 2, welche in radialer Richtung orientiert sind und bei der gezeigten Ausführung an der Formsegmentinnenseite 1a einen Abschnitt 2a mit einem größeren Durchmesser aufweisen. Im Abschnitt 2a ist jeweils eine Entlüftungseinheit 3 eingesetzt, wobei die Entlüftungseinheiten 3 in der in Fig. 1a gezeigten Darstellung - ohne eingeformten Rohreifen - sämtlich geöffnet sind. In dieser Lage steht jeweils ein federbeaufschlagter Ventilverschluss 4 über die Formsegmentinnenseite 1a über. In Fig. 1b ist ein Rohreifen, von welchem der Laufstreifen 5 angedeutet ist, bereits eingeformt, der Laufstreifen 5 hat die Ventilverschlüsse 4 in die in Fig. 1b gezeigte geschlossene Stellung gedrückt.

In der nachfolgenden Beschreibung von Ausführungsvarianten der Entlüftungseinheit 3 wird die Ausgestaltung und Anordnung ihrer Bestandteile mit Bezug auf ihr Gehäuse bzw. ihre Einbaulage im Formsegment 1 betrachtet, wobei sich die Bezeichnungen "außen" bzw. "außerhalb" auf Positionen bei der Formsegmentinnenseite oder weiter außen im Gehäuse und die Bezeichnungen "innen" bzw. "innerhalb" auf Positionen weiter im Inneren des Formsegmentes oder weiter innen im Gehäuse beziehen.

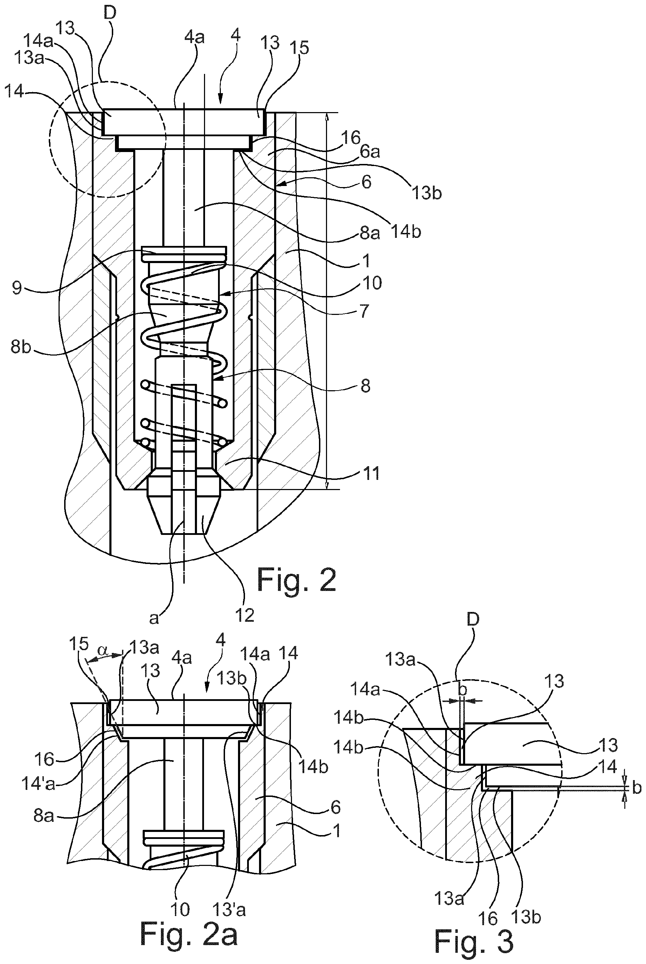

Die in den Figuren gezeigten Entlüftungseinheiten 3 sind beispielhaft Entlüftungseinheiten für eine Vulkanisierungsform für Rohreifen für Personenkraftwagen und weisen jeweils, wie es insbesondere Fig. 2 zeigt, als Hauptbestandteile ein Gehäuse 6 und einen Ventileinsatz 7 auf, wobei sowohl das Gehäuse 6 als auch der Ventileinsatz 7 gegenüber einer zentralen Achse a durch die Entlüftungseinheit 3 zumindest weitgehend rotationssymmetrisch ausgeführt sind.

Das Gehäuse 6 ist im Wesentlichen eine zylindrische Hülse mit einem äußeren Abschnitt 6a, dessen Außendurchmesser an den Innendurchmesser des Abschnittes 2a der Entlüftungsbohrung 2 angepasst ist, sodass die Entlüftungseinheit 3 in die Entlüftungsbohrung 2 durch Presssitz eingesetzt wird. Der Ventileinsatz 7 weist bei den dargestellten Ausführungen einen Ventilschaft 8 mit einem äußeren Schaftabschnitt 8a auf, der an seinem äußeren Ende den Ventilverschluss 4 und an seinem inneren Ende ein Federwiderlager 9 trägt. An das Federwiderlager 9 schließt ein Schaftabschnitt 8b an, welcher von einer Schraubendruckfeder 10 umgeben ist, die sich mit ihrem einen Ende am Federwiderlager 9 und mit ihrem zweiten Ende an einem am inneren Ende des Gehäuses 6 ausgebildeten und innenseitig umlaufenden Vorsprung 11 abstützt. Der Schaftabschnitt 8b weist einen durch einen Schlitz in zwei Teile geteilten Verankerungsabschnitt 12 auf, dessen freie Enden verdickt sind, sodass sich der Ventileinsatz 7 in der eingesetzten Position unterhalb des Vorsprunges 11 an diesem abstützen kann. Bei einer weiteren, nicht dargestellten Ausführung umgibt die Schraubendruckfeder den Ventilschaft derart, dass sie sich am Ventilverschluss abstützt.

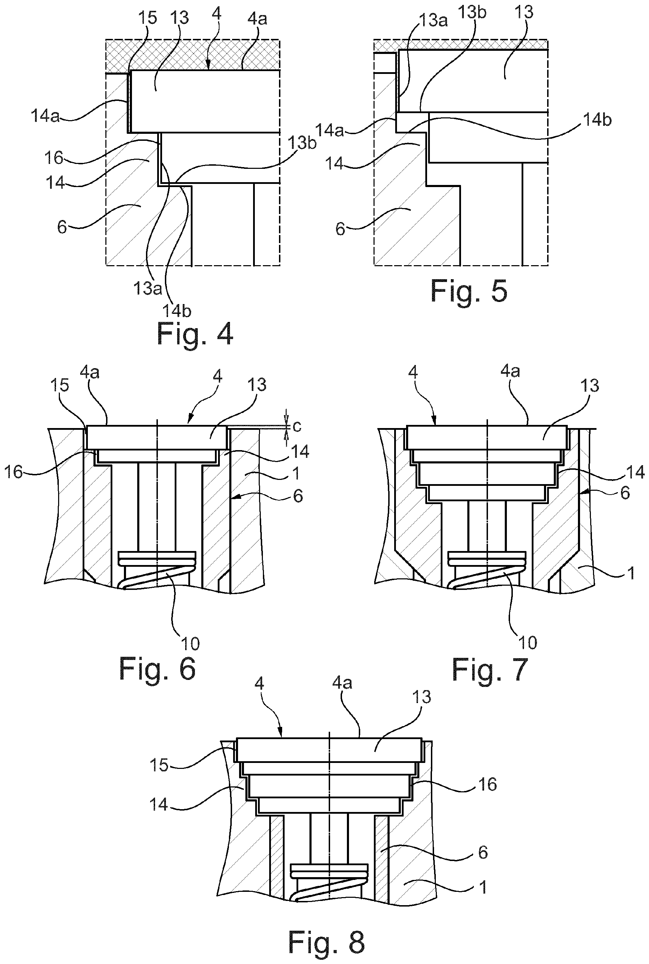

Bei sämtlichen Ausführungen ist der Ventilverschluss 4 treppenförmig mit zumindest zwei Stufen 13 gestaltet. Jede erste, äußerste Stufe 13 besteht aus einer in radialer Richtung verlaufenden Stufenfläche 13a und einer zu dieser unter einem rechten Winkel und parallel zur Formsegmentinnenseite 1a verlaufenden Stufenfläche 13b. Bei einer möglichen Ausführung, wie sie etwa in Fig. 2 sowie in Fig. 6 bis 8 gezeigt ist, ist die an die erste Stufe 13 anschließende Stufe 13 wie die erste Stufe 13 mit einer in radialer Richtung verlaufenden Stufenfläche 13a und einer zu dieser unter einem rechten Winkel verlaufenden Stufenfläche 13b versehen. Fig. 2a zeigt eine weitere Ausführung, bei welcher die an die erste Stufe 13 anschließende zweite Stufe 13 eine Stufenfläche 13'a aufweist, welche in Richtung zur zentraler Achse a geneigt verläuft und einen spitzen Winkel α von vorzugsweise 10° bis 60°, insbesondere 15° bis 45°, mit der Achse a einschließt. Die an diese Stufenfläche 13'a anschließende Stufenfläche 13b verläuft parallel zur Stufenfläche 13b der ersten Stufe 13. Jede weitere Stufe 13 weist insbesondere eine in radialer Richtung verlaufende Stufenfläche 13a und eine zu dieser unter einem rechten Winkel verlaufende Stufenfläche 13b auf. Jede Stufe 13 umläuft den Ventilverschluss 4 kreisförmig, wobei die äußerste Stufe 13 den größten Durchmesser, die innerste Stufe 13 den kleinsten Durchmesser aufweist. Die der Formsegmentinnenseite 1a zugeordnete Außenfläche 4a des Ventilverschlusses 4 an der äußersten Stufe 13 ist somit kreisförmig.

Eine treppenförmig gestufte Ausgestaltung mit Stufen 14 weist auch die Innenwand des Gehäuses 6 bzw. der Bohrung 2 an dessen bzw. deren äußeren Endabschnitt auf. Jeder in radialer Richtung verlaufenden Stufenfläche 13a ist eine in radialer Richtung verlaufende Stufenfläche 14a einer Stufe 14, der Stufenfläche 13'a eine gleichermaßen geneigte Stufenfläche 14`a einer Stufe 14 und jeder Stufenfläche 13b eine Stufenfläche 14b an einer Stufe 14 zugeordnet.

Die ersten Stufenflächen 13a, 14a an den radial äußersten Stufen 13, 14 verlaufen in radialer Richtung bzw. parallel zur Achse a. Zwischen diese beiden Stufenflächen 13a, 14a verbleibt ein ringförmig umlaufender schmaler Spalt 15, welcher eine Breite b (Fig. 3) von 0,01 mm bis 0,5 mm, insbesondere von 0,05 mm bis 0,25 mm, aufweist. Mit seiner Stufenfläche 13b an der radial äußersten Stufe 13 sitzt in der geschlossenen Stellung der Entlüftungseinheit 3 der Ventilverschluss 4 mit Flächenpressung auf der "waagrechten" Stufenfläche 14b an der radial äußerste Stufe 14 an der Innenwand des Gehäuses 6 bzw. der Bohrung 2. Dies ist jeweils die einzige Kontaktstelle des Ventilverschluss 4.

Die Dimensionierung bzw. Ausgestaltung der Stufen 13 und 14 ist ferner derart, dass in der geschlossenen Stellung der Entlüftungseinheit 3, bei geschlossenem Ventilverschluss 4, zwischen sämtlichen weiteren Stufenflächen 13a, 14a, 13'a, 14'a sowie 13b, 14b ebenfalls jeweils ein ringförmig umlaufender Spalt 16 verbleibt, welcher eine Breite b (Fig. 3) von 0,01 mm bis 0,5 mm, insbesondere von 0,05 mm bis 0,25 mm, aufweist. Sämtliche Spalten 16 sind miteinander verbunden und bilden somit einen einzigen von den Kontaktflächen ins Innere verlaufenden, durchgehenden, "treppenförmigen" Spalt, der entsprechend der Anzahl der Stufen 13, 14 die Richtung wechselt.

Die Spalten 16 wirken daher als Labyrinthspalten und somit in bekannter Weise als Barriere gegen ein Durch- und Eindringen von flüssigen oder geringviskosen Medien wie beispielsweise fließfähigen Kautschukmischungen. Der Richtungswechsel in den Spalten 16 erschwert ein Passieren, die Enge der Spalten einen Durchfluss unter Ausnutzung von Kapillarkräften.

In den umlaufenden ersten Spalt 15 kann Kautschukmischung einfließen, wie es Fig. 4 zeigt. Das vulkanisierte Gummimaterial haftet am Laufstreifen des Reifens und vorerst am Ventilverschluss 4, wie in Fig. 5 gezeigt, und begünstigt beim Entformen des vulkanisierten Reifens ein sicheres Öffnen des Ventilverschlusses 4.

Fig. 2, 2a und 3 bis 6 zeigen jeweils einen Ventilverschluss 4 mit zwei Stufen 13. Bei den in Fig. 2, 2a und 3 bis 5 gezeigten Ausführungen sind die Stufen 14 an der Innenwand des Gehäuses 6 ausgebildet, bei der in Fig. 6 gezeigten Ausführung ist die radial äußerste Stufenfläche 14a an der Innenwand der Bohrung 2 vorgesehen. Das Gehäuse 6 ist daher entsprechend nach innen versetzt in der Bohrung 2 eingesetzt und weist diese Stufenfläche nicht auf. Fig. 7 zeigt eine Ausführung mit vier Stufen 13 am Ventilverschluss 4 und vier Stufen 14 an der Innenwand des Gehäuses 6, Fig. 8 mit vier Stufen 13 am Ventilverschluss 4 und vier Stufen 14 an der Innenwand der Bohrung 2.

Bei einer bevorzugten Ausführung steht der Ventilverschluss 4 auch bei geschlossenem Entlüftungsventil 3 geringfügig über die Formsegmentinnenseite 1 über, der Überstand c (Fig. 6) beträgt in der Größenordnung von 0,05 mm bis 0,2 mm und unterstützt ein optimales Schließen der Entlüftungseinheit 3 und den Aufbau eines Gegendrucks in den Spalten 16.

### Bezugszeichenliste

- 1: Formsegment
- 1a: Formsegmentinnenseite
- 2: Bohrung
- 2a: Abschnitt
- 3: Entlüftungseinheit
- 4: Ventilverschluss
- 4a: Außenfläche
- 5: Laufstreifen
- 6: Gehäuse
- 7: Ventileinsatz
- 8: Ventilschaft
- 8a, 8b: Schaftabschnitt
- 9: Federwiderlager
- 10: Schraubendruckfeder
- 11: Vorsprung
- 12: Verankerungsabschnitt
- 13, 14: Stufe
- 13a, 13'a, 14a, 14`a: Stufenfläche
- 13b, 14b: Stufenfläche
- 15, 16: Spalt
- a: Achse
- b: Breite
- c: Überstand

## Patentansprüche

1. Entlüftungseinheit (3) für ein Formsegment (1) einer Vulkanisationsform eines Fahrzeugluftreifens mit einem in eine Bohrung (2) des Formsegmentes (1) einpressbaren, zylindrischen und hülsenförmigen, eine zentrale Achse (a) aufweisenden Gehäuse (6) und mit einem im Gehäuse (6) befindlichen und gegenüber diesem in Achsrichtung beweglichen, federbeaufschlagten Ventileinsatz (7) mit einem das Gehäuse (6) an seinem einen Ende verschließbaren Ventilverschluss (4), welcher in seiner geschlossenen Lage mit einer ringförmig umlaufenden Kontaktfläche auf einer ringförmig umlaufenden Kontaktfläche an der Innenwand des Gehäuses (6) flächig aufsitzt,
**dadurch gekennzeichnet,**
**dass** im geschlossenen Zustand der Entlüftungseinheit (3) außerhalb der Kontaktflächen ein parallel zur zentralen Achse (a) orientierter, nach außen offener, ringförmig umlaufender Spalt (15) vorhanden ist und zwischen dem Ventilverschluss (4) und der Innenwand des Gehäuses (6) innerhalb der Kontaktflächen Spalten (16) vorhanden sind, die in der Art einer Labyrinthdichtung wirken, indem der Ventilverschluss (4) und die Innenwand des Gehäuses (6) treppenartig mit zumindest zwei Stufen gestuft sind, wobei der Außendurchmesser der Stufen (13, 14) in Richtung Gehäuseinneres abnimmt und wobei zumindest die innerhalb der Kontaktflächen vorhandenen Spalten (16) zwischen den Stufenflächen (13a, 13'a, 13b) der Stufen (13) an der Innenwand des Gehäuses (6) und den Stufenflächen (14a, 14'a, 14b) der Stufen (14) am Ventilverschluss (4) gebildet sind.

2. Entlüftungseinheit (3) nach Anspruch 1, **dadurch gekennzeichnet, dass** der Spalt (15) zwischen dem Ventilverschluss (4) und der Innenwand des Gehäuses (6) vorhanden ist.

3. Entlüftungseinheit (3) nach Anspruch 1 oder 2, **dadurch gekennzeichnet, dass** die Kontaktflächen Stufenflächen (13b, 14b) an den am weitesten außen befindlichen Stufen (13, 14) sind, wobei diese Stufenflächen (13b, 14b) parallel zur Aussenfläche (4a) des Ventilverschlusses (4) verlaufen.

4. Entlüftungseinheit (3) nach einem der Ansprüche 1 bis 3, **dadurch gekennzeichnet, dass** die Stufenflächen (13'a, 14'a), welche innerhalb der die Kontaktflächen bildenden Stufenflächen (13b, 14b) an diese unmittelbar anschließen, in Richtung Gehäuseinneres geneigt verlaufen und mit der zentralen Achse (a) jeweils unter einem spitzen Winkel (α) von vorzugsweise 10° bis 60°, insbesondere 15° bis 45°, einschließen.

5. Entlüftungseinheit (3) nach einem der Ansprüche 1 bis 4, **dadurch gekennzeichnet, dass** die Spalten (15, 16) eine Breite von 0,01 mm bis 0,5 mm, insbesondere von 0,05 mm bis 0,25 mm, aufweisen.

6. Entlüftungseinheit nach einem der Ansprüche 1 bis 5, **dadurch gekennzeichnet, dass** die Anzahl der Stufen (13, 14) jeweils bis zu vier beträgt.

7. Formsegment (1) einer Vulkanisationsform eines Fahrzeugluftreifens mit einer Bohrung (2), in welcher eine Entlüftungseinheit (3) eingepresst ist, welche ein zylindrisches und hülsenförmiges, eine zentrale Achse (a) aufweisendes Gehäuse (6) und einen im Gehäuse (6) befindlichen und gegenüber diesem in Achsrichtung beweglichen, federbeaufschlagten Ventileinsatz (7) mit einem das Gehäuse (6) an seinem bei der Formsegmentinnenseite (1a) befindlichen Ende verschließbaren Ventilverschluss (4) aufweist,
**dadurch gekennzeichnet,**
**dass** im geschlossenen Zustand der Entlüftungseinheit (3) zwischen dem Ventilverschluss (4) und der Innenwand der Bohrung (2) radial außerhalb der Kontaktflächen ein in radialer Richtung orientierter, ringförmig umlaufender, zur Formsegmentinnenseite (1a) offener Spalt (15) vorhanden ist und der Ventilverschluss (4) mit einer ringförmig umlaufenden Kontaktfläche auf einer ringförmig umlaufenden Kontaktfläche an der Innenwand der Bohrung (2) flächig aufsitzt und zwischen dem Ventilverschluss (4) und der Innenwand der Bohrung (2) oder der Innenwand des Gehäuses (6) radial innerhalb der Kontaktflächen Spalten (16) vorhanden sind, die in der Art einer Labyrinthdichtung wirken, indem der Ventilverschluss (4) sowie die Innenwand der Bohrung (2) und/oder des Gehäuses (6) treppenartig mit zumindest zwei Stufen gestuft sind, wobei der Außendurchmesser der Stufen (13, 14) in Richtung Gehäuse- und Bohrungsinneres abnimmt und wobei innerhalb der Kontaktflächen die Spalten (16) zwischen den Stufenflächen (13a, 13'a, 13b) der Stufen (13) am Ventilverschluss (4) und Stufenflächen (14a, 14'a, 14b) der Stufen (14) an der Innenwand der Bohrung (2) und/oder des Gehäuses (6) gebildet sind.

8. Formsegment (1) nach Anspruch 7, **dadurch gekennzeichnet, dass** die Kontaktflächen Stufenflächen (13b, 14b) an den am weitesten außen befindlichen Stufen (13, 14) sind, wobei diese Stufenflächen (13b, 14b) parallel zur Formsegmentinnenseite (1a) verlaufen.

9. Formsegment (1) nach Anspruch 7 oder 8, **dadurch gekennzeichnet, dass** die Stufenflächen (13'a, 14'a), welche innerhalb der die Kontaktflächen bildenden Stufenflächen (13b, 14b) an diese anschließen, in Richtung Gehäuseinneres geneigt verlaufen und mit der zentralen Achse (a) jeweils unter spitzen Winkel (α) von vorzugsweise 10° bis 60°, insbesondere 15° bis 45°, einschließen.

10. Formsegment (1) nach einem der Ansprüche 7 bis 9, **dadurch gekennzeichnet, dass** die Spalten (14, 15) eine Breite (b) von 0,01 mm bis 0,5 mm, insbesondere von 0,05 mm bis 0,25 mm, aufweisen.

11. Formsegment (1) nach einem der Ansprüche 7 bis 10, **dadurch gekennzeichnet, dass** Anzahl der Stufen (13, 14) jeweils bis zu vier beträgt.

## Claims

1. Venting unit (3) for a mould segment (1) of a vulcanization mould of a pneumatic vehicle tyre, having a cylindrical and sleeve-shaped housing (6) which is able to be pressed into a bore (2) of the mould segment (1) and has a central axis (a), and having a spring-loaded valve insert (7) which is situated in the housing (6) and is movable in relation to the latter in an axial direction and has a valve closure (4), said valve closure being able to close off the housing (6) at one end thereof and, in its closed position, being seated areally with an annularly encircling contact surface on an annularly encircling contact surface on the inner wall of the housing (6),
**characterized**
**in that**, in the closed state of the venting unit (3), outside the contact surfaces, there is provided an annularly encircling gap (15) which is oriented parallel to the central axis (a) and is open to the outside and, between the valve closure (4) and the inner wall of the housing (6), within the contact surfaces, there are provided gaps (16) which act in the manner of a labyrinth seal in that the valve closure (4) and the inner wall of the housing (6) are stepped in a step-like manner with at least two steps, wherein the outer diameter of the steps (13, 14) decreases in the direction of the housing interior, and wherein at least the gaps (16) provided within the contact surfaces are formed between the step surfaces (14a, 14'a, 14b) of the steps (14) at the inner wall of the housing (6) and the step surfaces (13a, 13'a, 13b) of the steps (13) at the valve closure (4).

2. Venting unit (3) according to Claim 1, **characterized in that** the gap (15) is provided between the valve closure (4) and the inner wall of the housing (6).

3. Venting unit (3) according to Claim 1 or 2, **characterized in that** the contact surfaces are step surfaces (13b, 14b) on the steps (13, 14) which are situated furthest to the outside, wherein these step surfaces (13b, 14b) extend parallel to the outer surface (4a) of the valve closure (4).

4. Venting unit (3) according to one of Claims 1 to 3, **characterized in that** the step surfaces (13'a, 14'a) which directly adjoin, within the step surfaces (13b, 14b) forming the contact surfaces, the latter step surfaces extend in an inclined manner in the direction of the housing interior and in each case include an acute angle (α) of preferably 10° to 60°, in particular 15° to 45°, with the central axis (a).

5. Venting unit (3) according to one of Claims 1 to 4, **characterized in that** the gaps (15, 16) have a width of 0.01 mm to 0.5 mm, in particular of 0.05 mm to 0.25 mm.

6. Venting unit according to one of Claims 1 to 5, **characterized in that** there are up to four steps (13,14) in each case.

7. Mould segment (1) of a vulcanization mould of a pneumatic vehicle tyre, having a bore (2) in which a venting unit (3) is pressed, said venting unit having a cylindrical and sleeve-shaped housing (6) which has a central axis (a) and having a spring-loaded valve insert (7) which is situated in the housing (6) and is movable in relation to the latter in an axial direction and has a valve closure (4) which is able to close off the housing (6) at that end thereof which is situated at the mould-segment inner side (1a),
**characterized**
**in that**, in the closed state of the venting unit (3), between the valve closure (4) and the inner wall of the bore (2), radially outside the contact surfaces, there is provided an annularly encircling gap (15) which is oriented in a radial direction and is open towards the mould-segment inner side (1a) and the valve closure (4) is seated areally with an annularly encircling contact surface on an annularly encircling contact surface on the inner wall of the bore (2) and, between the valve closure (4) and the inner wall of the bore (2) or the inner wall of the housing (6), radially within the contact surfaces, there are provided gaps (16) which act in the manner of a labyrinth seal in that the valve closure (4) and the inner wall of the bore (2) and/or of the housing (6) are stepped in a step-like manner with at least two steps, wherein the outer diameter of the steps (13, 14) decreases in the direction of the housing interior and bore interior, and wherein, within the contact surfaces, the gaps (16) are formed between the step surfaces (13a, 13'a, 13b) of the steps (13) at the valve closure (4) and step surfaces (14a, 14'a, 14b) of the steps (14) at the inner wall of the bore (2) and/or of the housing (6).

8. Mould segment (1) according to Claim 7, **characterized in that** the contact surfaces are step surfaces (13b, 14b) on the steps (13, 14) which are situated furthest to the outside, wherein these step surfaces (13b, 14b) extend parallel to the mould-segment inner side (1a).

9. Mould segment (1) according to Claim 7 or 8, **characterized in that** the step surfaces (13'a, 14'a) which adjoin, within the step surfaces (13b, 14b) forming the contact surfaces, the latter step surfaces extend in an inclined manner in the direction of the housing interior and in each case include an acute angle (α) of preferably 10° to 60°, in particular 15° to 45°, with the central axis (a).

10. Mould segment (1) according to one of Claims 7 to 9, **characterized in that** the gaps (14, 15) have a width (b) of 0.01 mm to 0.5 mm, in particular of 0.05 mm to 0.25 mm.

11. Mould segment (1) according to one of Claims 7 to 10, **characterized in that** there are up to four steps (13, 14) in each case.

## Revendications

1. Unité d'évent (3) pour un segment de moule (1) d'un moule de vulcanisation d'un pneumatique de véhicule, comprenant un boîtier (6) cylindrique et en forme de douille, apte à être emmanché dans un alésage (2) du segment de moule (1) et présentant un axe central (a), et comprenant un insert de soupape (7) sollicité par un ressort, se trouvant dans le boîtier (6) et étant mobile par rapport à celui-ci dans la direction axiale, et ayant un obturateur de soupape (4) apte à fermer le boîtier (6) à l'une de ses extrémités et qui, dans sa position fermée, repose à plat par une surface de contact périphérique annulaire sur une surface de contact périphérique annulaire sur la paroi interne du boîtier (6),
**caractérisée**
**en ce qu'**à l'état fermé de l'unité d'évent (3), il existe à l'extérieur des surfaces de contact un interstice périphérique annulaire (15), ouvert vers l'extérieur et orienté parallèlement à l'axe central (a), et **en ce qu'**entre l'obturateur de soupape (4) et la paroi interne du boîtier (6), il existe, à l'intérieur des surfaces de contact, des interstices (16) qui agissent à la manière d'un joint à labyrinthe, en ce sens que l'obturateur de soupape (4) et la paroi interne du boîtier (6) sont en étagement à la manière d'un escalier ayant au moins deux marches, le diamètre extérieur des marches (13, 14) diminuant en direction de l'intérieur du boîtier et au moins les interstices (16) présents à l'intérieur des surfaces de contact étant formées entre les surfaces étagées (13a, 13'a, 13b) des marches (13) sur la paroi interne du boîtier (6) et les surfaces étagées (14a, 14'a, 14b) des marches (14) sur l'obturateur de soupape (4).

2. Unité d'évent (3) selon la revendication 1, **caractérisée en ce que** l'interstice (15) est présent entre l'obturateur de soupape (4) et la paroi interne du boîtier (6).

3. Unité d'évent (3) selon la revendication 1 ou la revendication 2, **caractérisée en ce que** les surfaces de contact sont des surfaces étagées (13b, 14b) sur les marches (13, 14) situées le plus à l'extérieur, ces surfaces étagées (13b, 14b) étant parallèles à la surface extérieure (4a) de l'obturateur de soupape (4).

4. Unité d'évent (3) selon l'une des revendications 1 à 3, **caractérisée en ce que** les surfaces étagées (13'a, 14'a), qui se raccordent directement aux surfaces étagées (13b, 14b) formant les surfaces de contact, s'étendent de manière inclinée en direction de l'intérieur du boîtier et forment chacune avec l'axe central (a) un angle aigu (α) allant de préférence de 10° à 60°, notamment de 15° à 45°.

5. Unité d'évent (3) selon l'une des revendications 1 à 4, **caractérisée en ce que** les interstices (15, 16) ont une largeur allant de 0,01 mm à 0,5 mm, notamment allant de 0,05 mm à 0,25 mm.

6. Unité d'évent selon l'une des revendications 1 à 5, **caractérisée en ce que** le nombre de marches (13, 14) respectif va jusqu'à quatre.

7. Segment de moule (1) d'un moule de vulcanisation d'un pneumatique de véhicule, comprenant un alésage (2) dans lequel est emmanchée une unité d'évent (3) qui comprend un boîtier (6) cylindrique et en forme de douille, présentant un axe central (a), et comprenant un insert de soupape (7) sollicité par un ressort, se trouvant dans le boîtier (6) et étant mobile par rapport à celui-ci dans la direction axiale, et ayant un obturateur de soupape (4) apte à fermer le boîtier (6) à son extrémité se trouvant près de la face intérieure (1a) du segment de moule,
**caractérisé**
**en ce qu'**à l'état fermé de l'unité d'évent (3), entre l'obturateur de soupape (4) et la paroi interne de l'alésage (2), il existe un interstice périphérique annulaire (15), ouvert vers le côté intérieur (1a) du segment de moule, radialement à l'extérieur des surfaces de contact, orienté dans la direction radiale, et **en ce que** l'obturateur de soupape (4) repose à plat par une surface de contact périphérique annulaire sur une surface de contact périphérique annulaire présente sur la paroi interne de l'alésage (2), et des interstices (16) sont présents entre l'obturateur de soupape (4) et la paroi interne de l'alésage (2) ou la paroi interne du boîtier (6), radialement à l'intérieur des surfaces de contact, qui agissent à la manière d'un joint à labyrinthe, en ce sens que l'obturateur de soupape (4) ainsi que la paroi interne de l'alésage (2) et/ou du boîtier (6) sont étagées à la manière d'un escalier avec au moins deux marches, le diamètre extérieur des marches (13, 14) diminue en direction de l'intérieur du boîtier et de l'alésage, et, à l'intérieur des surfaces de contact, les interstices (16) sont formés entre les surfaces étagées (13a, 13'a, 13b) des marches (13) sur l'obturateur de soupape (4) et les surfaces étagées (14a, 14'a, 14b) des marches (14) sur la paroi interne de l'alésage (2) et/ou du boîtier (6).

8. Segment de moule (1) selon la revendication 7, **caractérisé en ce que** les surfaces de contact sont des surfaces étagées (13b, 14b) sur les marches (13, 14) les plus à l'extérieur, ces surfaces étagées (13b, 14b) s'étendant parallèlement à la face interne (1a) du segment de moule.

9. Segment de moule (1) selon la revendication 7 ou 8, **caractérisé en ce que** les surfaces étagées (13'a, 14'a) qui se raccordent à l'intérieur des surfaces étagées (13b, 14b) formant les surfaces de contact, s'étendent de manière inclinée en direction de l'intérieur du boîtier et forment avec l'axe central (a) des angles aigus (α) allant de préférence de 10° à 60°, en particulier de 15° à 45°.

10. Segment de moule (1) selon l'une des revendications 7 à 9, **caractérisé en ce que** les interstices (14, 15) présentent une largeur (b) allant de 0,01 mm à 0,5 mm, en particulier allant de 0,05 mm à 0,25 mm.

11. Segment de moule (1) selon l'une des revendications 7 à 10, **caractérisé en ce que** le nombre de marches (13, 14) respectif va jusqu'à quatre.
